# EUROPEAN PATENT APPLICATION

(11) **EP 3 427 915 A1**
(43) Date of publication of application: **16.01.2019**
(21) Application number: 17762689.2
(22) Date of filing: 12.01.2017
(51) Int. Cl.: B29C 45/27, B33Y 80/00, B22F 3/105, B22F 3/16

(54) **SPRUE BUSHING**

(30) Priority: 09.03.2016 JP 2016046210
(71) Applicant: Panasonic Intellectual Property Management Co., Ltd., Osaka-shi, Osaka 540-6207 (JP)
(72) Inventor: ABE, Satoshi, Osaka-shi, Osaka 540-6207 (JP)
(74) Representative: Müller-Boré & Partner Patentanwälte PartG mbB
(86) International application number: PCT/JP2017/000869
(87) International publication number: WO 2017/154342

(57) **Abstract**

In order to provide a sprue-bush which is capable of more suitably cooling a melt raw resin in a flow path for a raw resin, there is provided a sprue-bush comprising a flow path for a raw resin and a flow path for cooling media located around the flow path for the raw resin, wherein the sprue-bush comprises a low heat transfer portion, the low heat transfer portion being located at a local region between an upper side portion of the flow path for the raw resin and the flow path for the cooling media, the low heat transfer portion being in a heat transfer relatively lower than that of a region other than the local region.

## Description

### TECHNICAL FIELD

The disclosure relates to a sprue-bush. More particularly, the disclosure relates to a sprue-bush which is used in a mold.

### BACKGROUND OF THE INVENTION

Technologies supporting "manufacturing" industry in Japan includes a molding technology using molds. The molding technology includes a pressure molding method, an injection molding method, and an extrusion molding method. In these molding methods, the injection molding method is a method for obtaining a molded article from a melt raw resin using a mold for an injection mold.

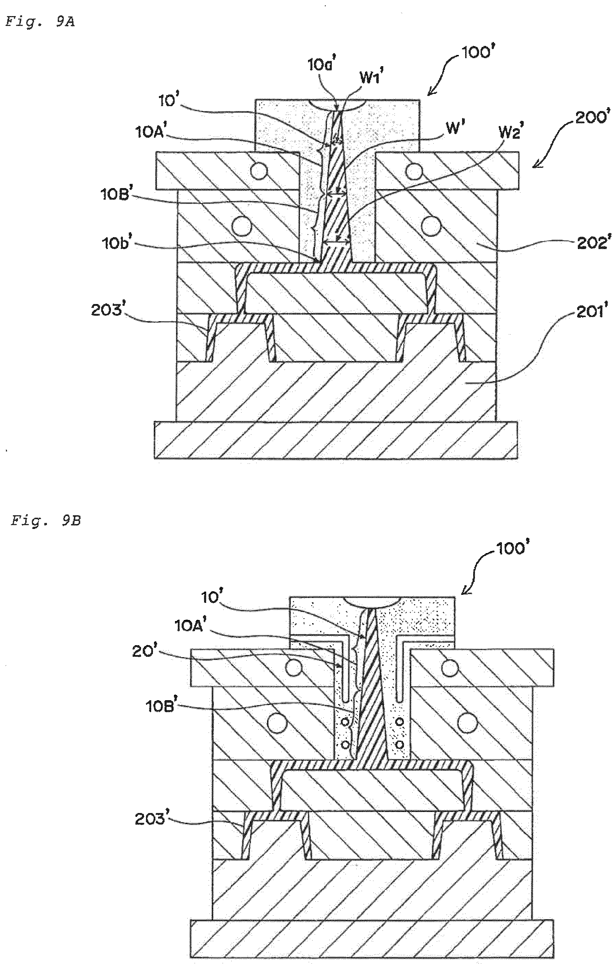

In the injection molding method, a melt raw resin is injected into a mold cavity 203' composed of the one of molds (i.e., core side mold) 201' of an injection mold 200' and the other of molds (i.e., cavity mold) 202' thereof (see Fig. 9A) . The injected melt raw resin is subjected to a cooling followed by a solidification in a mold cavity 203' to form a molded article. An injection of the melt raw resin into the mold cavity 203' is generally performed via a sprue-bush 100'.

As shown in Fig. 9A, the sprue bush 100' used for the injection mold 200' has a flow path for a raw resin 10' therein. The flow path for the raw resin 10 ' extends from the one of end portions 10 a 'into which the melt raw resin is supplied to the other of end portions 10 b' leading into the mold cavity 203'.

The flow path for the raw resin 10' is in a form of a taper to make an ejection of the molded article easier. Specifically, a width dimension W' of the flow path for the raw resin 10' gradually increases as it extends from the one of the end portions 10 a 'to the other of the end portions 10 b'. As shown in Fig. 9A, a width dimension W₁' of an upstream side 10 A' of the flow path for the raw resin 10 'is relatively small, whereas a width dimension W₂' of a downstream side 10B 'of the flow path for the raw resin 10' is relatively large.

The flow path for the raw resin 10 ' in the form of the taper is preferable in view of the ejection of the molded article, however it may not be necessarily preferable in view of the cooling followed by the solidification of the melt raw resin. For example, in a case where the flow path for the raw resin 10' in the form of the taper has a longer length, it may largely affect the downstream side having a relatively large width dimension W'. Namely, it may make the cooling and subsequent solidification of the melt raw resin difficult. In a case that the cooling and subsequent solidification of the melt raw resin is difficult, it may cause an increase of a necessary time from the injection of the melt raw resin to the ejection of the molded article, which may make a molding cycle longer. Accordingly, as shown in Fig. 9B, a flow path for cooling media 20' may be located around the flow path for the raw resin 10'.

### PATENT DOCUMENTS (RELATED ART PATENT DOCUMENTS)

PATENT DOCUMENT 1: WO 2008-038694

### DISCLOSURE OF THE INVENTION

### PROBLEMS TO BE SOLVED BY THE INVENTION

However, the sprue bush 100' having the flow path for the cooling media 20' may cause the following problems (see Fig. 9B).

In case that the cooling media flow in the flow path for the cooling media 20', a cooling heat of the cooling media is transmitted to the melt raw resin in the flow path for the raw resin 10' due to a fact that the sprue-bush 100' is made of a metal material. In this regard, the melt raw resin in the flow path for the raw resin 10' tends to be cooled and subsequently solidified more easily at the upstream side 10A' than the downstream side 10B' due to the relatively small width dimension of the upstream side 10A'.

In a case that the melt raw resin at the upstream side 10A' is cooled and subsequently solidified before the cooling and the subsequent solidification of the melt raw resin at the downstream side 10B', there is a possibility that the flow path for the raw resin 10' is substantially blocked. In this case, it may make a suitable injection of the raw resin through the flow path for the raw resin 10' impossible. Thus, it may be impossible to fill the melt raw resin having a predetermined amount into the mold cavity 203'. Therefore, a molded article having a desired shape cannot be finally obtained.

Under these circumstances, the present invention has been created. That is, an object of the present invention is to provide a sprue-bush which is capable of more suitably cooling the melt raw resin in the flow path for the raw resin.

### MEANS FOR SOLVING THE PROBLEMS

In order to achieve the above object, an embodiment of the present invention provides a sprue-bush comprising a flow path for a raw resin and a flow path for cooling media located around the flow path for the raw resin, wherein the sprue-bush comprises a low heat transfer portion, the low heat transfer portion being located at a local region between an upper side portion of the flow path for the raw resin and the flow path for the cooling media, the low heat transfer portion being in a heat transfer relatively lower than that of a region other than the local region.

### EFFECT OF THE INVENTION

In the sprue-bush according to an embodiment of the present invention, it is possible to more suitably cool the melt raw resin in the flow path for the raw resin.

### BRIEF DESCRIPTION OF THE DRAWINGS

Fig. 1 is a cross sectional view schematically showing a sprue-bush according to an embodiment of the present invention.
Fig. 2 is a cross sectional view schematically showing a sprue-bush comprising a region of a hollow portion.
Fig. 3 is a cross sectional view schematically showing a sprue-bush comprising a hollow portion in a vacuum state.
Fig. 4 is a cross sectional view schematically showing a sprue-bush to be used as a flow path for heat media.
Fig. 5 is a cross sectional view schematically showing a sprue-bush in which a body of powders is provided.
Fig. 6 is a cross sectional view schematically showing a sprue-bush comprising a region of a porous material.
Fig. 7 is a cross sectional view schematically showing a sprue-bush comprising a flow path for cooling media on which a coating layer is located.
Fig. 8A is a cross-sectional view schematically showing a laser-sintering/machining hybrid process upon a formation of a powder layer in accordance with a selective laser sintering method.
Fig. 8B is a cross-sectional view schematically showing a laser-sintering/machining hybrid process upon a formation of a solidified layer in accordance with a selective laser sintering method.
Fig. 8C is a cross-sectional view schematically showing a laser-sintering/machining hybrid process in a middle of a stacking in accordance with a selective laser sintering method.
Fig. 9A is a cross-sectional view schematically showing a conventional sprue-bush having no a flow path for cooling media.
Fig. 9B is a cross-sectional view schematically showsing a conventional sprue-bush having a flow path for cooling media.

### MODES FOR CARRYING OUT THE INVENTION

A sprue-bush according to an embodiment of the present invention will be described in more detail with reference to accompanying drawings. It should be noted that a configuration and a dimensional proportion of each of elements in the drawings are merely shown for illustrative purposes, and thus they are not the same as those of each of actual elements.

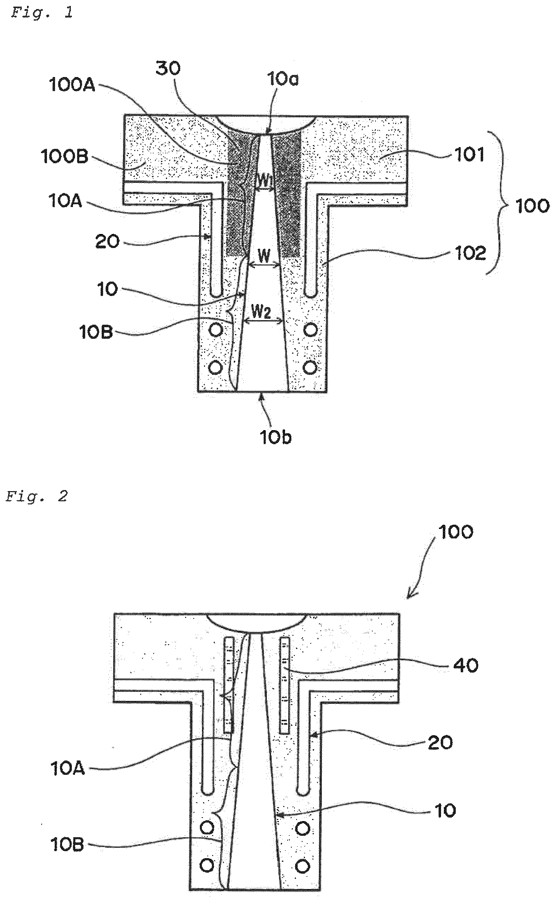

As shown in Fig. 1, a sprue-bush 100 according to an embodiment of the present invention is a metal part composed of a flange portion 101 and a base portion 102, the base portion 102 being integrated with the flange portion 101. As shown in the drawing, the sprue-bush 100 has a flow path for a raw resin 10 and a flow path for cooling media 20 therein, the flow path for the cooling media being located around the flow path for the raw resin 10.

The flow path for the raw resin 10 of the sprue-bush 100 extends from the one of end portions 10 a where a melt raw resin is supplied, to the other of end portions 10 b which leads into a mold cavity. On a basis of a flow of the melt raw resin at a time of a molding, the one of the end portions 10a corresponds to an "upstream side" end portion and the other of the end portions 10 b corresponds to a "downstream side" end portion. In order to make an ejection of a molded article to be obtained by cooling and subsequently solidifying the melt raw resin easier, the flow path for the raw resin 10 is in a form of a taper. More specifically, the flow path for the raw resin 10 is configured such that its width dimension W gradually increases as it extends from the one of the end portions 10a to the other of the end portions 10b. Namely, a width dimension W₁ of an upstream side 10A of the flow path for the raw resin 10 is relatively small, whereas a width dimension W₂ of a downstream side 10B of the flow path for the raw resin 10 is relatively large.

The flow path for the cooling media 20 of the sprue-bush 100 is a flow path for flowing the cooling media and is a flow path which contributes to a cooling of the melt raw resin existing in the flow path for the raw resin 10. That is, at the time of molding, a temperature of the melt raw resin existing in the flow path for the raw resin 10 is decreased due to the cooling media flowing through the flow path for the cooling media 20. The phrase "cooling media" as used herein refers to a fluid capable of giving a cooling effect to the melt raw resin existing in the flow path for the raw resin 10, the fluid corresponding to cooling water or cooling gas.

The phrase "upstream side of the flow path for the raw resin" as used herein means a portion located on a proximal side with respect to the one of the end portions 10a into which the melt raw resin is supplied. On the other hand, the phrase "downstream side of the flow path for the raw resin" as used herein means a portion located on a distal side with respect to the one of the end portions 10a into which the melt raw resin is supplied. Although a boundary between the upstream side and the downstream side of the flow path for the raw resin is not particularly limited, it is for example "a half-division point of an entire longitudinal dimension of the flow path for the raw resin". More specifically, "the upstream side of the flow path for the raw resin" corresponds to a region extending from the one of the end portions 10a of the flow path for the raw resin 10 to the "half-division point of the entire longitudinal dimension of the flow path for the raw resin 10", for example. On the other hand, "the downstream side of the flow path for the raw resin" corresponds to a region extending from the "half-division point of the entire longitudinal dimension of the flow path for the raw resin 10" to the other of the end portions 10b of the flow path for the raw resin 10, for example.

As shown in Fig. 1, the sprue-bush 100 of the present invention comprises a low heat transfer portion 30 which is located at a local region 100A between an upper side portion 10A of the flow path for the raw resin 10 and the flow path for the cooling media 20, the low heat transfer portion 20 being in a heat transfer relatively lower than that of a region 100B other than the local region 100A. That is, the low heat transfer portion 30 of the sprue-bush of the present invention has a local or a limited configuration between the flow path for the raw resin 10 and the flow path for the cooling media 20. The phrase "low heat transfer portion" substantially means a portion which reduces or inhibits a phenomenon that a cooling heat resulting from the cooling media existing in the flow path for the cooling media 20 is transferred to the melt raw resin in the flow path for the raw resin 10 in the sprue-bush.

The sprue-bush 100 of the present invention comprises the low heat transfer portion 30 between the upstream side 10A of the flow path for the raw resin 10 and the flow path for the cooling media 20, which prevents the cooling heat due to the cooling media in the flow path for the cooling media 20 from transferring to the upstream side 10A. A prevention of the cooling heat-transfer to the upstream side 10A leads to a more suitable prevention of the cooling of the melt raw resin in the upstream side 10A. Therefore, it is possible to prevent an occurrence of a phenomenon that the melt raw resin is cooled and subsequently solidified at the upstream side 10A prior to the cooling and subsequent solidification thereof at the downstream side 10B, and thus a blocking of the flow path for the raw resin 10 can be prevented.

A prevention of the blocking of the flow path for the raw resin 10 allows the melt raw resin to be more suitably injected via the flow path for the raw resin 10. Therefore, the sprue bush 100 of the present invention allows the melt resin having a predetermined amount to be filled in the mold cavity, and thus it is possible to finally obtain a molded article having a desired shape.

Hereinafter, a method for manufacturing the sprue-bush according to an embodiment of the present invention will be described in detail. The sprue-bush 100 according to an embodiment of the present invention can be manufactured using a "selective laser sintering method" as described below. Without being limited to the above method, it is also possible to form only a part of the sprue-bush 100 by the selective laser sintering method and to subject a metal part prepared in advance to be machined to obtain a remaining of the sprue-bush 100, thereby to finally manufacture the sprue-bush 100. The "part of the sprue-bush 100" can include a base part 102 of the sprue-bush or a part of the base part 102, for example (see Fig. 1). The "remaining part of the sprue-bush" can include a flange portion 101 of the sprue-bush or a portion composed of the flange portion 101 and a part of the base portion 102 (see Fig. 1).

The "selective laser sintering method" to be used for manufacturing the sprue-bush is a method which is capable of manufacturing a three-dimensional shaped object by irradiating a powder material with a light beam. The method can produce the three-dimensional shaped object by an alternate repetition of a powder-layer forming and a solidified-layer forming on the basis of the following (i) and (ii):
(i) forming a solidified layer by irradiating a predetermined portion of a powder layer with a light beam, thereby allowing a sintering of the predetermined portion of the powder or a melting and subsequent solidification of the predetermined portion; and
(ii) forming another solidified layer by newly forming a powder layer on the formed solidified layer, followed by similarly irradiating the powder layer with the light beam.

This kind of technology makes it possible to produce the three-dimensional shaped object with its complicated contour shape in a short period of time. The three-dimensional shaped object obtained can be used as a sprue-bush or a part of the sprue-bush in a case where an inorganic powder material (e.g., a metal powder material) is used as the powder material.

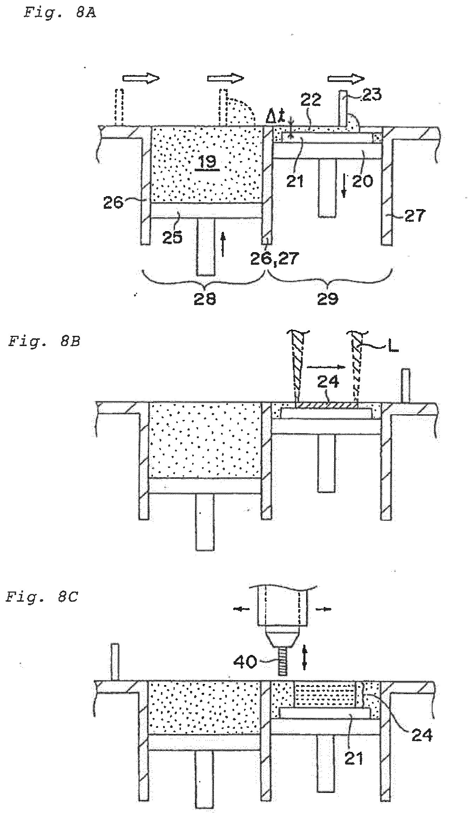

Taking a case as an example wherein the metal powder is used as the powder material, and the three-dimensional shaped object produced therefrom is used as the sprue-bush or a part of the sprue-bush, the selective laser sintering method will now be briefly described. As shown in Figs. 8A-8C, a powder layer 22 with its predetermined thickness is firstly formed on a base plate 21 by a movement of a squeegee blade 23 (see Fig. 8A) . Then, a predetermined portion of the powder layer 22 is irradiated with a light beam L to form a solidified layer 24 (see Fig. 8B). Another powder layer is newly provided on the formed solidified layer, and is irradiated again with the light beam to form another solidified layer. In this way, the powder-layer forming and the solidified-layer forming are alternately repeated, and thereby allowing the solidified layers 24 to be stacked with each other (see Fig. 8C). The alternate repetition of the powder-layer forming and the solidified-layer forming leads to a production of a three-dimensional shaped object with a plurality of the solidified layers integrally stacked therein.

In order to dispose the flow path for the raw resin 10 and the flow path for the cooling media 20 in the sprue-bush 100 as the three-dimensional shaped object (see Fig. 1), for example, a non-irradiated portion not partially irradiated with the light beam is provided upon a formation of the solidified layer. More specifically, upon the formation of the solidified layer in accordance with the selective laser sintering method, predetermined regions to be the flow path for the raw resin and the flow path for the cooling media are not irradiated with light beams are made non-irradiated parts. Then, a removal for the powders existing in the non-irradiated portion is finally performed. Thus, it is possible to form the flow path for the raw resin 10 and the flow path for the cooling media 20 in the three-dimensional shaped object as the sprue-bush 100.

As described above, in a case of the formation of a part of the sprue-bush 100 (e.g., the base portion 102 of the sprue-bush) by the selective laser sintering method, a metal part may be subjected to a machine process using a machine tool to a remaining portion of the sprue-bush (e.g., the flange portion 101 of the sprue bush) comprising a part of the flow path for the raw resin 10 and a part of the flow path for the cooling media 20. As the machine tool, for example, an end mill can be used. The end mill may be a ball end mill having two blades, the ball end mill being composed of a super hard material. Then, a part of the sprue-bush and the remaining part thereof are contacted with each other such that a part of the flow path for the raw resin 10 formed in the part of the sprue-bush and a part of the flow path for the raw resin 10 formed in the remaining part of the sprue-bush are in a connection with each other. Also, a part of the sprue-bush and the remaining part thereof are contacted with each other such that a part of the flow path for the cooling media 20 formed in the part of the sprue-bush and a part of the flow path for the cooling media 20 formed in the remaining part of the sprue-bush are in a connection with each other. Such the contact of the precursors of the sprue-bush with each other allows a desired sprue-bush to be obtained.

### [Specific embodiments on low heat transfer portion]

Specific embodiments on the low heat transfer portion will be described below.

The low heat transfer portion provided in the sprue-bush mainly has two specific embodiments.

A first specific embodiment relates to an embodiment wherein a hollow portion is applied. In such the embodiment, the low heat transfer portion is composed of a hollow portion. The hollow portion may be used (1) in a vacuum state, (2) as a flow path for heat media for flowing the heat media, or (3) as a space for providing a body of powders.

(1) In a case where the hollow portion is used in a vacuum state, the number of gas molecules transferring heat is low in the hollow portion. Thus, the hollow portion can suitably function as a "heat insulating region". (2) In a case that the hollow portion is used as the flow path for the heat media, a warm heat arising from the heat media causes a heat transfer due to the cooling media in the flow path for the cooling media to be reduced at a position where the flow path for the heat media is provided and its vicinity. Such the hollow portion can suitably function as a "region where a cooling heat transfer is reduced". (3) In a case where the hollow portion has the body of the powders therein, the powder particles are brought into a "point" contact with each other and thus a heat transfer of the body of the powders becomes relatively low. Therefore, such the hollow portion can suitably function as the "region where the cooling heat transfer is reduced".

A second specific embodiment relates to an embodiment wherein a material of the sprue-bush is locally changed.

For example, a sprue-bush according to the second specific embodiment comprises the low heat transfer portion which is made of a porous material. The porous material has a large number of voids therein, which makes it possible to reduce the cooling heat resulting from the cooling media in the flow path for the cooling media. Therefore, the porous material can suitably function as a "region where the cooling heat transfer is reduced".

According to the present invention, at least one of the above two specific embodiments allows "the low heat transfer portion locally provided between the upper side portion of the flow path for the raw resin and the flow path for the cooling media" to be suitably realized. The above two specific embodiments will be described in detail below.

### [(1) Low heat transfer portion of Hollow portion]

The sprue-bush 100 according to an embodiment of the present invention comprises the low heat transfer portion which composed of the hollow portion 40 as shown in Fig. 2. The phrase "hollow portion" as used herein means a space region of the sprue-bush 100 provided at least between the upstream side 10A of the flow path for the raw resin 10 and the flow path for the cooling media 20. A use of the hollow portion 40 as the low heat transfer portion can prevent the cooling heat arising from the cooling media in the flow path for the cooling media 20 from transferring at the hollow portion 40. The prevention of the cooling heat transfer at the hollow portion 40 leads to a more suitable prevention of the cooling of the melt raw resin at the upstream side 10A of the flow path for the raw resin 10. Thus, it is possible to prevent the occurrence of the phenomenon that the melt raw resin is cooled and subsequently solidified at the upstream side 10A prior to the cooling and subsequent solidification thereof at the downstream side 10B. Therefore, the blocking of the flow path for the raw resin 10 can be more suitably prevented.

### Hollow portion in vacuum state

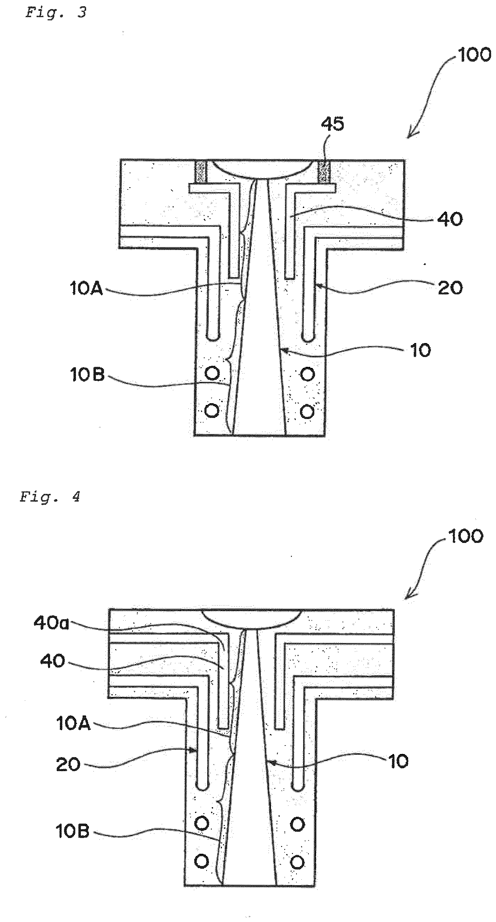

The hollow portion 40 may be in a vacuum state (see Fig. 3). The phrase "Vacuum state" as used herein refers to a space state with a pressure lower than the atmospheric pressure. In a case that the hollow portion 40 is in the vacuum state, the hollow portion 40 is in a state where an amount of air is relatively small. That is, the number of gas molecules transferring heat is low in the hollow portion 40. When the number of gas molecules transferring heat is low in the hollow portion 40, it can prevent the cooling heat resulting from the cooling medium in the flow path for the cooling media 20 from transferring to the upstream side 10A of the flow path for the raw resin 10. This means that the cooling of the melt raw resin at the upstream side 10A is more suitably prevented. Thus, it is possible to prevent the occurrence of the phenomenon that the melt raw resin is cooled and subsequently solidified at the upstream side 10A prior to the cooling and subsequent solidification thereof at the downstream side 10B. Therefore, the blocking of the flow path for the raw resin 10 can be more suitably prevented.

The hollow portion 40 does not have to be in a complete vacuum state, and it may include air from an outside. The air has a thermal conductivity smaller than a metal material. For example, the thermal conductivity of the metal material (e.g., an iron material) at a room temperature is about 80 W·m⁻¹·K⁻¹, whereas the thermal conductivity of air is about 0.02 W·m⁻¹·K⁻¹. Therefore, even if the air intentionally enters the hollow portion, the transfer of the cooling heat arising from the cooling media is prevented due to a presence of the hollow portion 40.

The hollow portion 40 in the vacuum state can be obtained by the following method for example. Firstly, upon the formation of the solidified layer in accordance with the selective laser sintering method, a certain local region is not irradiated with the light beam, and then the powder in the local region is finally removed to form the hollow portion. Without being limited to the above, a local region of the metal part is subjected to the machine process to form the hollow portion. After forming the hollow portion, a so-called "evacuation" is performed from a communicating portion 45 with the outside to obtain the hollow portion 40 in the vacuum state (see Fig. 3) . The communicating portion 45 may be appropriately sealed to maintain the vacuum state.

### Hollow portion as flow path for heat media

The hollow portion 40 may be a flow path for heat media 40a as shown in Fig. 4 for example. In an illustrated embodiment, a part of the flow path for the heat media 40a is located between the upstream side 10A of the flow path for the raw resin 10 and the flow path for the cooling media 20 (see Fig. 4). The phrase "flow path for the heat media" as used herein means a flow path for flowing the heat media. The heat media may include a fluid such as hot water, steam or hot air.

In the sprue-bush 100 comprising the hollow portion 40 as the flow path for the heat media 40a, the cooling media are flowed in the flow path for the cooling media 20, and the heat media are flowed in the flow path for the heat media 40a. At least a part of the flow path for the heat media 40a is located between the upstream side 10A of the flow path for the raw resin 10 and the flow path for the cooling media 20. Thus, a transfer of the cooling heat resulting from the cooling media in flow path for the cooling media 20 is prevented at a region where the flow path for the heat media 40a is provided and a vicinity thereof. As a result, it is possible to prevent the cooling heat from the flow path for the cooling media 20 from transferring to the upstream side 10A of the flow path for the raw resin 10. Thus, it is possible to prevent the occurrence of the phenomenon that the melt raw resin is cooled and subsequently solidified at the upstream side 10A prior to the cooling and subsequent solidification thereof at the downstream side 10B. Therefore, the blocking of the flow path for the raw resin 10 can be more suitably prevented.

The flow path for the heat media 40a can be suitably obtained by a connection of a pipe for heat media to the hollow portion 40, the pipe for the heat media being connected to a source of heat media and including such as a fluid pump.

### Hollow portion having filled body of powders

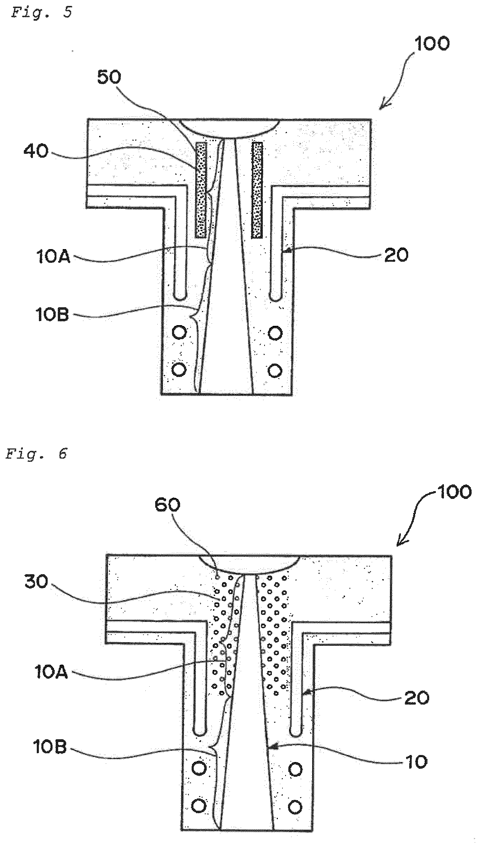

In the sprue-bush 100 according to an embodiment of the present invention, a body of powders (i.e., powder-body) may be used. As shown in Fig. 5, the hollow portion 40 has the body of powders 50 therein for example. The phrase "body of powders" as used herein refers to an aggregate of powder particles composed of at least one of a metal powder and a resin powder. The metal powder may be an iron-based metal powder having an average particle diameter of about 5 µm to 100 µm for examples. Furthermore, the resin powder may be nylon, polypropylene, ABS or the like having an average particle diameter of about 30 µm to 100 µm.

In a case where the hollow portion 40 has the body of powders 50 therein, the powder particles in the hollow portion 40 are brought into the "point" contact with each other and thus the heat transfer of the body of the powders becomes relatively low. Thus, the body of the powders 50 allows a transfer of the cooling heat to be reduced, the cooling heat being due to the cooling media in the flow path for the cooling media 20. As a result, it is possible to prevent the cooling heat from transferring from the flow path for the cooling media 20 to the upstream side 10A of the flow path for the raw resin 10. Thus, it is possible to prevent the occurrence of the phenomenon that the melt raw resin is cooled and subsequently solidified at the upstream side 10A prior to the cooling and subsequent solidification thereof at the downstream side 10B. Therefore, the blocking of the flow path for the raw resin 10 can be more suitably prevented.

In a case where the hollow portion 40 has the body of powders 50 therein, it is possible to obtain an effect that a structural strength of the sprue-bush 100 is increased. The hollow portion 40 forms a "space" inside the sprue-bush. Thus, a presence of the hollow portion 40 may be not generally preferable in respect of the structural strength of the sprue-bush 100. In this regard, as shown in Fig. 5, on a condition that the hollow portion 40 has the body of the powders 50 therein, it makes a compensation/prevention of a decrease in its strength due to the hollow portion 40 possible. That is, the body of the powders 50 in the hollow portion 40 can function as a reinforcing member for the structural strength of the sprue-bush. In view of a preferable reinforcement of the structural strength of the sprue-bush as described above, it is preferable that the hollow portion 40 is filled with more many powders 50.

The hollow portion 40 filled with the body of the powders 50 can be obtained by performing the selective laser sintering method. Specifically, upon the formation of the solidified layer in accordance with the selective laser sintering method, a region where the body of the powders is provided is not irradiated with the light beam to make such the region a non-irradiated portion. Then, the powders in the non-irradiated part are not removed and the remaining state of the powders is kept until a completion of manufacturing the sprue-bush. Thus, it is possible to obtain the sprue-bush 100 comprising the hollow part 40 having the body of the powders 50 therein. Without being limited to the above, a certain local region of a metal part is subjected to a machine process to form the hollow portion 40, and then a supply of the powders into the hollow portion 40 is performed to thereby obtain the "hollow portion 40 having the body of the powders 50 therein".

### [(2) Low heat transfer portion of Porous material]

The sprue-bush 100 according to an embodiment of the present invention comprises the low heat transfer part 30 which is composed of a porous material 60 as shown in Fig. 6 for example. The phrase "porous material" as used herein refers to a material having a porosity with a large number of minute voids (i.e., pores). While not being limited to a specific embodiment, an average size of each void is preferably about 10 nm to 1 mm, more preferably about 20 nm to 500 nm, for example about 100 nm.

The air substantially exists in the voids of the porous material 60. As described above, the thermal conductivity of the air is lower than that of the metal material. Thus, the porous material 60 in which the air exists allows a transfer of the cooling heat resulting from the cooling media in the flow path for the cooling media 20 to be reduced. As a result, it is possible to prevent the cooling heat from transferring from the flow path for the cooling media 20 to the upstream side 10A of the flow path for the raw resin 10. Thus, it is possible to prevent the occurrence of the phenomenon that the melt raw resin is cooled and subsequently solidified at the upstream side 10A prior to the cooling and subsequent solidification thereof at the downstream side 10B.

The porous material 60 as the low heat transfer portion 30 may be obtained by the selective laser sintering method. Upon the formation of the solidified layer in accordance with the selective laser sintering method, a formation of a region composed of the porous material 60 is possible due to a control of the irradiation conditions of the light beam. More specifically, upon an irradiation of a part of the region to be the solidified layer with the light beam, a reduction of the irradiation energy of the light beam allows a sintered density of such a part to be relatively lower. For example, the sintered density can be set to 40% to 90%. The region of the solidified layer having such a low sintered density can be used as a region of the porous material 60. For example, a lower the irradiation energy of the light beam having about 2 to 3 J/mm² can make the sintered density about 70 to 80% for example. The formation of the region of the porous material 60 can result from not only (1) the reduction of the irradiation energy of the light beam, but also (2) an increase of a scanning speed of the light beam, (3) a widening of a scanning pitch of the light beam, and (4) an increase of a condensing diameter of the light beam.

The first and second specific embodiments described above each relates to an embodiment on the low heat transfer portion between the upstream side of the flow path for the raw resin flow path and the flow path for the cooling media. In this regard, the following embodiment allows the "heat transfer to the upstream side of the flow path for the raw resin" to be reduced.

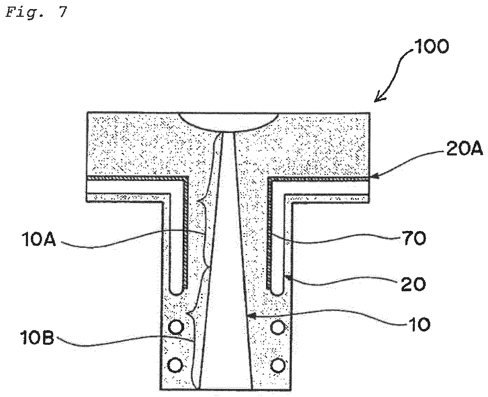

Flow path for cooling media with coating layer A sprue-bush 100 shown in Fig. 7 has a coating layer 70. More specifically, the coating layer 70 is provided on at least a part 20A of an inner wall surface for forming the flow path for the cooling media 20. The phrase "coating layer" as used herein means a layer which covers at least a part of the inner wall surface for forming the flow path for the cooling media 20. "At least a part 20 A of the inner wall surface for forming the flow path for the cooling media 20" particularly refers to the inner wall surface proximate to the upstream side 10 A of the flow path for the raw resin 10 as shown in Fig. 7. The coating layer 70 is preferably a layer of a low thermal conductivity material. While not being limited to a specific embodiment, the low thermal conductivity material for the coating layer 70 may include an epoxy resin, a silicone resin, and the like.

As shown in Fig. 7, in a condition that the coating layer 70 of the low thermal conductivity material is provided on at least a part 20 A of the inner wall surface for forming the flow path for the cooling media 20, the coating layer 70 allows a transfer of the cooling heat resulting from the cooling media in the flow path for the cooling media 20 to be reduced. Specifically, the coating layer 70 of the low thermal conductivity material can prevent the cooling heat from transferring to the upstream side 10A of the flow path for the raw resin 10. Therefore, the cooling of the melt raw resin at the upstream side 10A is more suitably prevented, and thus it is possible to prevent the occurrence of the phenomenon that the melt raw resin is cooled and subsequently solidified at the upstream side 10A prior to the cooling and subsequent solidification thereof at the downstream side 10B.

Although the sprue-bush according to an embodiment of the present invention has been hereinbefore described, the present invention is not limited to the above embodiment. It will be readily appreciated by the skilled person that various modifications are possible without departing from the scope of the present invention.

### INDUSTRIAL APPLICABILITY

The sprue-bush according to an embodiment of the present invention can be used to inject a melt raw resin into a mold cavity composed of a core side and a cavity side in an injection mold.

### CROSS REFERENCE TO RELATED PATENT APPLICATION

The present application claims the right of priority of Japanese Patent Application No. 2016-046210 (filed on March 9, 2016, the title of the invention: "SPRUE-BUSH"), the disclosure of which is incorporated herein by reference.

### EXPLANATION OF REFERENCE NUMERALS

- 100: Sprue-bush
- 100A: Local region (Local region between upper side portion of flow path for raw resin and flow path for cooling media)
- 100B: Region other than local region
- 10: Flow path for raw resin
- 10A: Upper side portion of flow path for raw resin
- 20: Flow path for cooling media
- 30: Low heat transfer portion
- 40: Hollow portion
- 40a: Flow path for heat media
- 50: Body of powders (Powder-body)
- 60: Porous material

## Claims

1. A sprue-bush comprising a flow path for a raw resin and a flow path for cooling media located around the flow path for the raw resin, wherein the sprue-bush comprises a low heat transfer portion, the low heat transfer portion being located at a local region between an upper side portion of the flow path for the raw resin and the flow path for the cooling media, the low heat transfer portion being in a heat transfer relatively lower than that of a region other than the local region.

2. The sprue-bush according to claim 1, wherein the low heat transfer portion is composed of a hollow portion.

3. The sprue-bush according to claim 2, wherein the hollow portion is in a vacuum state.

4. The sprue-bush according to claim 2, wherein the hollow portion is a flow path for heat media.

5. The sprue-bush according to claim 2, wherein the hollow portion has a body of powders in the hollow portion.

6. The sprue-bush according to claim 1, wherein the low heat transfer portion is composed of a porous material.
